# EUROPÄISCHE PATENTANMELDUNG

(11) **EP 2 653 297 A1**
(43) Veröffentlichungstag der Anmeldung: **23.10.2013**
(21) Anmeldenummer: 12002803.0
(22) Anmeldetag: 20.04.2012
(51) Int. Cl.: B29C 70/44, B29C 70/48, B29D 99/00

(54) **Verfahren zur Herstellung eines Windenergieanlagenbauteils**

(71) Anmelder: Nordex Energy GmbH, 22419 Hamburg (DE)
(72) Erfinder: Austinat, Dirk, 17126 Jarmen (DE)
(74) Vertreter: Werner, Richard

(57) **Zusammenfassung**

Verfahren zur Herstellung eines Windenergieanlagenbauteils mit den Schritten:
● Bereitstellen eines Transferkörpers (12), der eine konvex gekrümmte Außenfläche (14) aufweist,
● Anordnen eines Fasermaterials auf der konvex gekrümmten Außenfläche (14),
● Anordnen des Transferkörpers (12) mit dem Fasermaterial in einer Form (24), deren konkav gekrümmte Innenfläche (30) eine Oberfläche des herzustellenden Windenergieanlagenbauteils vorgibt,
● Aushärten eines das Fasermaterial umgebenden, flüssigen Kunststoffmaterials, wobei

● beim Anordnen des Transferkörpers (14) mit dem Fasermaterial in der Form (24) die konvex gekrümmte Außenfläche (14) des Transferkörpers (12) nach oben und die konkav gekrümmte Innenfläche (30) der Form (24) nach unten weist.

## Beschreibung

Die Erfindung betrifft ein Verfahren zur Herstellung eines Windenergieanlagenbauteils, bei dem ein Transferkörper bereitgestellt wird, der eine konvex gekrümmte Außenfläche aufweist. Auf der konvex gekrümmten Außenfläche wird ein Fasermaterial angeordnet. Der Transferkörper mit dem Fasermaterial wird in einer Form angeordnet, deren konkav gekrümmte Innenfläche eine Oberfläche des herzustellenden Windenergieanlagenbauteils vorgibt. Ein das Fasermaterial umgebendes, flüssiges Kunststoffmaterial härtet aus.

Gegenüber anderen verbreiteten Verfahren, bei denen das Fasermaterial in einer konkav gekrümmten Form angeordnet wird, soll die Anwendung eines Transferkörpers die exakte Positionierung des Fasermaterials in der Form vereinfachen. Die exakte Anordnung des Fasermaterials entsprechend der Bauteilspezifikation und eine optimale Einbettung des Fasermaterials in das Kunststoffmaterial sind für die erreichte Festigkeit des Bauteils maßgeblich. Insbesondere bei Bauteilen mit großen Abmessungen und relativ starker Krümmung entstehen beim herkömmlichen Einlegen des Fasermaterials in eine konkave Form besondere Schwierigkeiten, wenn einzelne Lagen des Fasermaterials verrutschen oder sich Wellen oder Falten bilden.

In dieser Situation schlägt die Druckschrift WO 2010/097657 A1 vor, das Fasermaterial in mehreren Lagen auf einem Transferkörper anzuordnen. Der Transferkörper weist eine konvex gekrümmte Unterstützungsplatte auf, auf die das Fasermaterial aufgelegt wird. Anschließend wird das Fasermaterial mit Fäden an der Trägerplatte fixiert. Der Transferkörper mit dem daran befestigten Fasermaterial wird dann um 180° gedreht und in einer konkaven Form angeordnet. Vor dem Einbringen eines flüssigen Kunststoffmaterials wird der Transferkörper aus der Form entfernt, während das Fasermaterial mit der Trägerplatte in der Form verbleibt.

Aus der Druckschrift DE 10 2006 059 737 A1 ist ein ähnliches Verfahren bekannt geworden, bei dem das Fasermaterial vor dem Anordnen auf einem gekrümmten Transferkörper auf einen ebenen Transportrahmen aufgelegt wird, der eine biegsame Transportoberfläche aufweist. Anschließend wird der Transportrahmen mit der biegsamen Transportoberfläche und dem darauf angeordneten Fasermaterial über dem gekrümmten Transferkörper abgesenkt. Das Fasermaterial wird dann mit Gurten an dem Transferkörper befestigt. Die Anordnung des Fasermaterials in der eigentlichen Form erfolgt dann wie bei dem zuvor beschriebenen Verfahren durch Umdrehen des Transferkörpers um 180° und Absenken in die Form.

Andere Möglichkeiten zur Herstellung relativ stark gekrümmter Windenergieanlagenbauteile sind aus den Druckschriften WO 2011/131206 A1 und DE 10 2009 003 864 A1 bekannt geworden. In beiden Fällen wird allerdings mit einer konvex gekrümmten Form gearbeitet, auf der das Fasermaterial angeordnet wird. In der Druckschrift WO 2011/131206 A1 wird dann mithilfe einer elektrisch aktivierbaren Membran Druck auf das Fasermaterial ausgeübt. In der Druckschrift DE 10 2009 003 864 A1 erfolgt eine herkömmliche Vakuuminfusion, wobei eine oleophob behandelte, mikroporöse Membran oberhalb des Fasermaterials angeordnet wird.

Davon ausgehend ist es die Aufgabe der Erfindung, ein Verfahren zur Verfügung zu stellen, mit dem auch stark gekrümmte Windenergieanlagenbauteile einfacher hergestellt werden können.

Diese Aufgabe wird gelöst durch das Verfahren mit den Merkmalen des Anspruchs 1. Vorteilhafte Ausgestaltungen sind in den sich anschließenden Unteransprüchen angegeben.

Das Verfahren dient zur Herstellung eines Windenergieanlagenbauteils und weist die folgenden Schritte auf:
● Bereitstellen eines Transferkörpers, der eine konvex gekrümmte Außenfläche aufweist,
● Anordnen eines Fasermaterials auf der konvex gekrümmten Außenfläche,
● Anordnen des Transferkörpers mit dem Fasermaterial in einer Form, deren konkav gekrümmte Innenfläche eine Oberfläche des herzustellenden Windenergieanlagenbauteils vorgibt,
● Aushärten eines das Fasermaterial umgebenden, flüssigen Kunststoffmaterials, wobei
● beim Anordnen des Transferkörpers mit dem Fasermaterial in der Form die konvex gekrümmte Außenfläche des Transferkörpers nach oben und die konkav gekrümmte Innenfläche der Form nach unten weist.

Der Transferkörper weist eine hinreichende Stabilität auf, um das Fasermaterial darauf ablegen und gegebenenfalls gemeinsam mit dem Transferkörper transportieren zu können. Der Transferkörper kann hierzu eine Tragstruktur aufweisen z. B. in Form eines Rahmens oder in Form von Rippen oder Spanten. Die Tragstruktur kann insbesondere die konvex gekrümmte Außenfläche unterstützen. Die Geometrie der konvex gekrümmte Außenfläche des Transferkörpers entspricht im Wesentlichen der Geometrie der konkav gekrümmten Innenfläche der Form und ist komplementär zu dieser ausgebildet. Die konvex gekrümmte Außenfläche kann geschlossen sein. Sie kann jedoch auch Öffnungen oder Durchbrechungen aufweisen und/oder zum Beispiel von einer Gitterstruktur gebildet sein, solange das Fasermaterial auf der konvex gekrümmten Außenfläche in der gewünschten Weise angeordnet werden kann.

Das Fasermaterial kann beispielsweise Glasfasern, Kohlenstofffasern und/oder Aramidfasern aufweisen. Insbesondere können Gelege oder Gewebe derartiger Fasern verwendet werden, um Vorgaben hinsichtlich der Anzahl, Orientierung und genauen Anordnung der Fasern einzuhalten.

Die Innenfläche der Form ist konkav gekrümmt und gibt eine Oberfläche des herzustellenden Windenergieanlagenbauteils vor. Die vorgegebene Oberfläche ist dementsprechend konvex gekrümmt. Die konkav gekrümmte Innenfläche der Form weist eine zu der konvex gekrümmten Außenfläche des Transferkörpers im Wesentlichen komplementär geformte Oberfläche auf. Zusätzlich kann die Form weitere Formabschnitte umfassen, die ebene oder konvex gekrümmte Oberflächen aufweisen. Die Form kann beispielsweise aus Metall oder einem Verbundwerkstoff bestehen und Verstärkungen oder eine Stützkonstruktion aufweisen.

Bei der Erfindung weist die konvex gekrümmte Außenfläche des Transferkörpers nach oben, und zwar nicht nur beim Anordnen des Fasermaterials auf der Außenfläche, sondern auch beim Anordnen des Transferkörpers mit dem Fasermaterial in der Form. Die konkav gekrümmte Innenfläche der Form weist nach unten, d.h., dass eine Innenseite der Form im Wesentlichen nach unten weist und die Form somit "über Kopf" angeordnet ist. Insbesondere kann die konvex gekrümmte Außenfläche des Transferkörpers unterhalb der nach unten weisenden, konkav gekrümmten Innenfläche der Form angeordnet werden.

Bei herkömmlichen Verfahren wird die Form hingegen mit der Innenseite nach oben angeordnet, damit das Fasermaterial einfach in die Form eingelegt werden kann. Bei der Verwendung eines Transferkörpers kann das Verfahren jedoch erheblich vereinfacht werden, wenn die Form "über Kopf" angeordnet und der Transferkörper mit der konvex gekrümmten Außenfläche nach oben weisend in der Form angeordnet wird. In diesem Fall ist es nicht erforderlich, das Fasermaterial an dem Transferkörper oder an einer sonstigen Trägerschicht zu fixieren. Es genügt, das Fasermaterial in der gewünschten Anordnung auf der konvex gekrümmten Außenfläche anzuordnen. Wahlweise können einzelne Lagen des Fasermaterials relativ zu einander oder relativ zu der konvex gekrümmten Außenfläche gegen ein Verrutschen gesichert werden. Es ist jedoch nicht erforderlich und bei der Erfindung auch nicht vorgesehen, sie so weitgehend an dem Transferkörper zu befestigen, dass dieser nachfolgend wie bei den eingangs diskutierten, bekannten Verfahren um 180° gedreht werden kann. Die Anordnung des Transferkörpers mit der konvex gekrümmten Außenfläche nach oben auch während des Positionierens in der Form vereinfacht das Verfahren bereits dadurch wesentlich, dass keine weitgehende Fixierung des Fasermaterials notwendig ist. Außerdem trägt dieses Vorgehen auch zu einer höheren Bauteilqualität bei, weil selbst bei einer sehr sorgfältigen Fixierung des Fasermaterials durch das Umdrehen des Transferkörpers leicht Verwerfungen im Fasermaterial entstehen, die die Bauteilqualität beeinträchtigen.

In einer Ausgestaltung verbleibt die Form während des Anordnens des Transferkörpers mit dem Fasermaterial in der Form in einer festen Position. In dieser festen Position ist die Form "über Kopf" angeordnet. Dies kann zu einer vereinfachten Durchführung des Verfahrens beitragen, weil die Form nicht bewegt werden muss. Ein Bewegen der Form bringt grundsätzlich ein gewisses Risiko für eine unerwünschte Verformung mit sich.

In einer Ausgestaltung wird der Transferkörper von unten in die Form hineinbewegt. Während dieser Bewegung kann der Transferkörper im Wesentlichen in gerader Linie unterhalb der Form angeordnet sein. Nach dem Anordnen des Fasermaterials auf der konvex gekrümmten Außenfläche kann der Transferkörper zudem seitlich bis in eine Position unterhalb der Form bewegt werden. In jedem Fall kann das Fasermaterial auf dem Transferkörper angeordnet werden, bevor das Aushärten des flüssigen Kunststoffmaterials beginnt und die Form benötigt wird. Bei einem Hineinbewegen in die Form von unten kann dann ein Verrutschen des Fasermaterials besonders sicher vermieden werden. Der Transferkörper kann so ausgebildet sein, dass eine vertikale Bewegung des Transferkörpers möglich ist, insbesondere auch nach dem Anordnen in der Form. Dadurch kann der Transferkörper von unten gegen die Form gepresst werden. Dies ist insbesondere beim Anlegen des Vakuums von Vorteil, da so der Transferkörper vertikal nachpositioniert werden kann.

In einer Ausgestaltung verbleibt der Transferkörper beim Aushärten des flüssigen Kunststoffmaterials in seiner in der Form angeordneten Position. Der Transferkörper kann daher seine das Fasermaterial unterstützende Funktion so lange wie nötig ausführen. Außerdem wird ein Verrutschen des Fasermaterials durch ein vorzeitiges Bewegen des Transferkörpers aus der Form heraus vermieden.

In einer Ausgestaltung weist der Transferkörper zusätzlich zu der konvexen Außenfläche eine Begrenzungsfläche auf, die eine Oberfläche des herzustellenden Bauteils vorgibt. Grundsätzlich wird die Oberfläche des herzustellenden Bauteils von der Form vorgegeben. Die genaue Formgebung der konvexen Außenfläche des Transferkörpers spielt dabei eine untergeordnete Rolle, weil das Fasermaterial insbesondere während einer Vakuuminfusion an die Form herangezogen und dabei ggf. von der konvexen Außenfläche entfernt wird. Wird der Transferkörper zusätzlich zu der konvexen Außenfläche jedoch mit einer Begrenzungsfläche versehen, die sich beispielsweise seitlich an die konvex gekrümmte Außenfläche anschließt oder in einem Abstand davon angeordnet ist, kann die Kontur eines Bauteilrands, die nicht unmittelbar an einer Innenseite der Form anliegt, von der Begrenzungsfläche vorgegeben werden. Dies ermöglicht beispielsweise eine exakte Ausbildung einer sich an einen Rand der Form anschließenden Bauteilfläche. Bei herkömmlichen Verfahren, bei denen das Fasermaterial in die Form eingelegt wird, gegebenenfalls auch unter Zuhilfenahme eines Transferkörpers, wird das Fasermaterial in der Regel so angeordnet, dass es über die Abmessungen des Bauteils an einigen Randbereichen übersteht. Dies erfordert ein nachträgliches Besäumen und somit aufwendige Nacharbeiten. Außerdem erhöht sich der Bedarf an Fasermaterial. Bei der Erfindung kann das Fasermaterial hingegen passgenau an die Begrenzungsfläche des Transferkörpers heran angeordnet werden, sodass ein nachträgliches Besäumen nicht erforderlich ist.

In einer Ausgestaltung wird zwischen der konvexen Außenfläche und dem Fasermaterial eine luftdichte Schicht angeordnet und gegenüber der Form abgedichtet. Grundsätzlich kann ein für das Verfahren gegebenenfalls erforderliches, luftdichtes Verschließen der Form auf beliebige Art und Weise ausgeführt werden. Besonders zweckmäßig ist es, eine luftdichte Schicht in der genannten Weise anzuordnen und gegenüber der Form abzudichten. Auf diese Weise kann die luftdichte Schicht bereits vorbereitet werden, bevor das Fasermaterial in die Form eingebracht wird. Dadurch kann die Zeitdauer, während der die Form benötigt wird, verringert werden und es können in einer gegebenen Zeit mehr Bauteile in derselben Form hergestellt werden. Außerdem besteht bei der genannten Anordnung der luftdichten Schicht zwischen der konvex gekrümmten Außenfläche und dem Fasermaterial die Möglichkeit, dass das Fasermaterial durch den Umgebungsdruck an die Form herangepresst wird, wobei es sich gegebenenfalls von der konvex geformten Außenfläche entfernen kann. Das Abdichten gegenüber der Form kann beispielsweise durch Verkleben der luftdichten Schicht mit der Form in einem Randbereich der Form und/oder durch Einsatz eines geeigneten Dichtungsmaterials bewirkt werden.

In einer Ausgestaltung ist die luftdichte Schicht eine Vakuumfolie. Eine solche Vakuumfolie kann besonders einfach auf der konvex gekrümmten Außenfläche des Transferkörpers angeordnet werden, bevor das Fasermaterial platziert wird.

In einer Ausgestaltung wird die luftdichte Schicht mit einer Druckhülle umgeben und zwischen der luftdichten Schicht und der Druckhülle wird ein Überdruck erzeugt. Bei der Druckhülle handelt es sich um eine weitere luftdichte Schicht, die beispielsweise ein flexibles Material wie eine weitere Folie und/oder ein beschichtetes Gewebe aufweisen kann. Diese Druckhülle umgibt die luftdichte Schicht, sodass durch Erzeugen eines Überdrucks zwischen der luftdichten Schicht und der Druckhülle eine zusätzliche Kompression des in der Form befindlichen Materials erzielt wird. Insbesondere können nötigenfalls Gewichtskräfte des in der Form angeordneten Materials kompensiert werden, sodass das herzustellende Bauteil zuverlässig und vollständig an der Innenseite der Form anliegt, auch wenn es ein hohes Eigengewicht aufweist. Der erzeugte Überdruck kann beispielsweise in einem Bereich von wenigen Millibar bis zu einem Bar oder mehr oberhalb des Umgebungsdrucks betragen.

In einer Ausgestaltung wird der Transferkörper gegenüber der Form abgedichtet. In diesem Fall kann der Transferkörper die luftdichte Schicht oder einen Teil davon bilden. Ein Vakuum kann dann zwischen der Form und dem Transferkörper hergestellt werden. Ebenfalls sinnvoll ist eine Verwendung in Kombination mit einer zwischen dem Transferkörper und dem Fasermaterial ausgebildeten luftdichten Schicht. In diesem Fall kann zwischen dieser luftdichten Schicht und dem Transferkörper ebenfalls ein Unterdruck ausgebildet werden oder es kann allein durch die Abdichtung dieses Volumens eine zusätzliche Barriere für durch Undichtigkeiten in der luftdichten Schicht in die Form eintretende Luft geschaffen werden. Außerdem kann ein gegenüber der Form abgedichteter Transferkörper die bereits angesprochene Druckhülle oder einen Teil davon bilden. In diesem Fall kann die gesamte Anordnung mit der ersten luftdichten Schicht und der zusätzlichen Druckhülle sehr einfach aufgebaut werden, indem nach dem Anordnen des Transferkörpers mit dem Fasermaterial in der Form die erste Schicht gegenüber der Form und der Transferkörper bzw. eine weitere, damit verbundene luftdichte Schicht ebenfalls gegenüber der Form abgedichtet wird.

In einer Ausgestaltung wird das flüssige Kunststoffmaterial mittels Vakuuminfusion in die Form infundiert. Dies geschieht nach dem Anordnen des Transferkörpers mit dem Fasermaterial in der Form. Hierzu wird in der Form ein Unterdruck erzeugt, so dass das flüssige Kunststoffmaterial von dem gegenüber dem Unterdruck höheren Umgebungsdruck in die Form gepresst und das Fasermaterial in der Form gegebenenfalls komprimiert wird. Das flüssige Kunststoffmaterial ist beispielsweise ein Gemisch aus Harz und Härter, insbesondere auf Polyester- oder Epoxidbasis. Das flüssige Kunststoffmaterial härtet aufgrund einer chemischen Reaktion aus. Nach dem Aushärten des flüssigen Kunststoffmaterials kann das Windenergieanlagenbauteil aus der Form entnommen werden.

In einer Ausgestaltung weist der Transferkörper eine Angussöffnung auf. Wie üblich wird für die Vakuuminfusion eine Angussöffnung und eine Absaugöffnung benötigt. Zweckmäßigerweise wird die Angussöffnung am Transferkörper angeordnet, sodass die Infusion des flüssigen Kunststoffmaterials von unten nach oben erfolgen kann. Es können mehrere Angussöffnungen am Transferkörper ausgebildet sein, zum Beispiel über eine Längsrichtung des Transferkörpers verteilt.

In einer Ausgestaltung weist der Transferkörper eine Aussparung auf, in der ein Angusskanal angeordnet wird. Eine Angussöffnung kann zusätzlich an dem Transferkörper ausgebildet sein und mit dem Angusskanal verbunden werden. Alternativ kann der Angusskanal eine oder mehrere Angussöffnungen aufweisen, die beim Anordnen des Angusskanals so platziert werden, dass das flüssige Kunststoffmaterial in die Form einströmen kann. Um eine bevorzugte Anordnung des Angusskanals sicherzustellen, kann der Transferkörper mit der genannten Aussparung versehen sein, in die der Angusskanal ganz oder teilweise eingesetzt werden kann.

In einer Ausgestaltung weist die Form eine Absaugöffnung auf. Durch die Absaugöffnung kann die in der Form befindliche Luft abgesaugt werden. Die Absaugöffnung kann sich zum Beispiel in einem oberen Bereich der Form befinden, insbesondere an einem höchsten Punkt der Form. Es versteht sich, dass auch mehrere Absaugöffnungen an der Form ausgebildet sein können, beispielsweise verteilt über eine Längsrichtung der Form.

Im Bereich einer Angussöffnung kann, insbesondere vor dem Anordnen des Fasermaterials, ein Verteilermedium angeordnet werden. Nach dem Anordnen des Fasermaterials kann auch im Bereich der Absaugöffnung ein Absaugmedium, z.B. in Form einer Membran angeordnet werden, insbesondere bevor der Transferkörper mit dem Fasermaterial in der Form angeordnet wird. Somit können weitere Elemente des für die Vakuuminfusion zweckmäßigen Aufbaus weitgehend vorbereitet werden, bevor die Form benötigt wird.

In einer Ausgestaltung ist das Fasermaterial beim Anordnen auf der konvex gekrümmten Oberfläche des Transferkörpers bereits mit dem flüssigen Kunststoffmaterial durchtränkt. Es wird also statt mit einer Vakuuminfusion mit bereits im Vorfeld mit einem flüssigen Kunststoffmaterial imprägnierten Fasermaterialien, sogenannten Prepregs, gearbeitet. Diese Prepregs werden beim Aushärten komprimiert, insbesondere ebenfalls mittels Vakuum. Zu den flüssigen Kunststoffmaterialien gilt das vorstehend gesagte, wobei das Aushärten bevorzugt bei erhöhter Temperatur erfolgt.

In einer Ausgestaltung weist die Form ein Heizelement auf. Mit dem Heizelement kann das herzustellende Bauteil während des Aushärtens des flüssigen Kunststoffmaterials auf einer gewünschten Temperatur gehalten werden. Ebenfalls möglich ist die Verwendung eines Kühlelements, um auch ein Abkühlen bei stark exotherm ablaufenden chemischen Reaktionen zu ermöglichen.

In einer Ausgestaltung wird das Fasermaterial in einer Vielzahl von Lagen angeordnet, sodass sich ein Faserpaket mit einer Höhe von 50 mm oder mehr ergibt. Bei Faserpaketen mit einer solchen Höhe kann das Verfahren mit besonderem Vorteil eingesetzt werden, weil die Gefahr eines Verrutschens des Fasermaterials besonders groß ist.

In einer Ausgestaltung ist das Windenergieanlagenbauteil ein Windenergieanlagenrotorblattteil. Das Windenergieanlagenrotorblattteil kann beispielsweise eine Rotorblatthalbschale oder ein Element einer Tragstruktur des Windenergieanlagenrotorblatts sein, beispielsweise ein sogenannter Wurzel- oder Flanscheinleger zur Verstärkung einer Blattwurzel oder eines Flansches des Rotorblatts. Insbesondere die Wurzel- oder Flanscheinleger weisen häufig eine sehr große Materialstärke und gleichzeitig eine besonders starke, im Wesentlichen halbkreisförmige Krümmung auf. Für derartige Bauteile ist das Verfahren besonders geeignet.

Die Erfindung wird nachfolgend anhand von zwei in fünf Figuren dargestellten Ausführungsbeispielen näher erläutert. Es zeigen:
- Fig. 1: ein Verfahren gemäß der Erfindung am Beispiel der Herstellung eines Wurzeleinlegers für ein Windenergieanlagenrotorblatt mittels Vakuuminfusion in einer vereinfachten Querschnittsdarstellung,
- Fig. 2: das Detail A aus der Fig. 1 in einer vergrößerten Darstellung,
- Fig. 3: das Detail B aus der Fig. 1 in einer vergrößerten Darstellung,
- Fig. 4: ein Verfahren gemäß der Erfindung am Beispiel der Herstellung eines Wurzeleinlegers für ein Windenergieanlagenrotorblatt unter Verwendung von Prepregs in einer vereinfachten Querschnittsdarstellung, und
- Fig. 5: das Detail C aus der Fig. 4 in einer vergrößerten Darstellung.

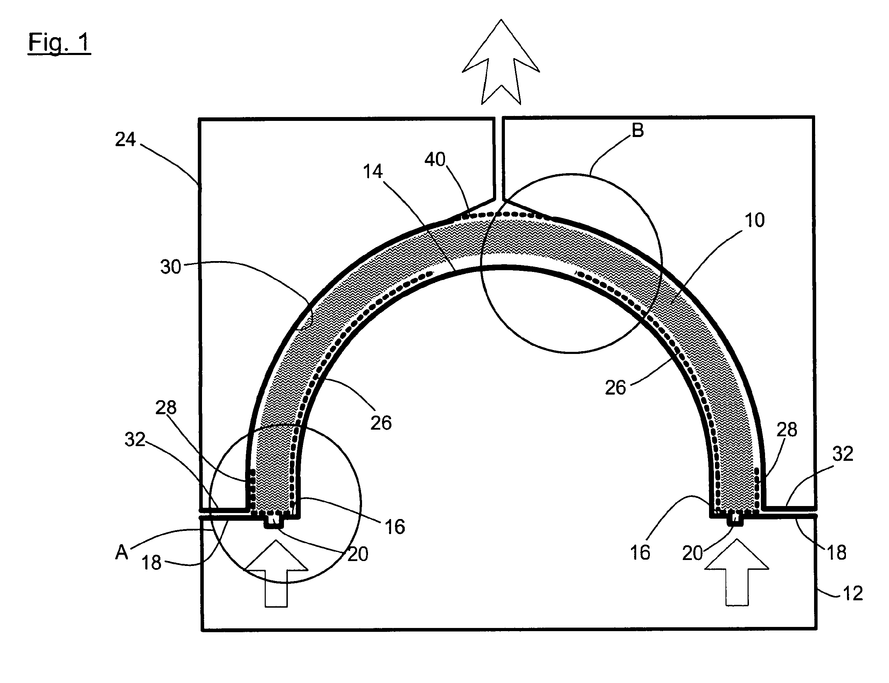

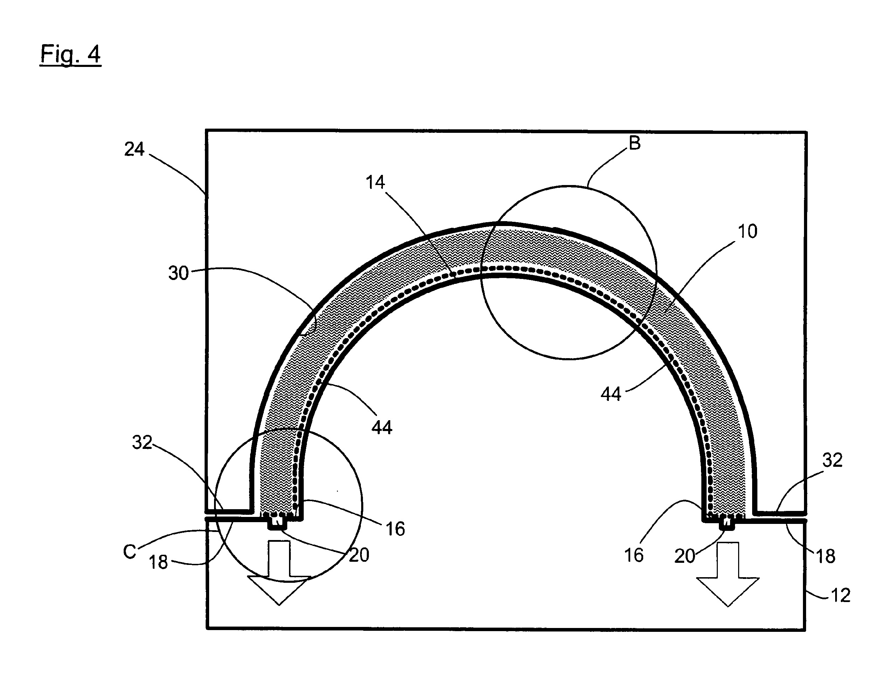

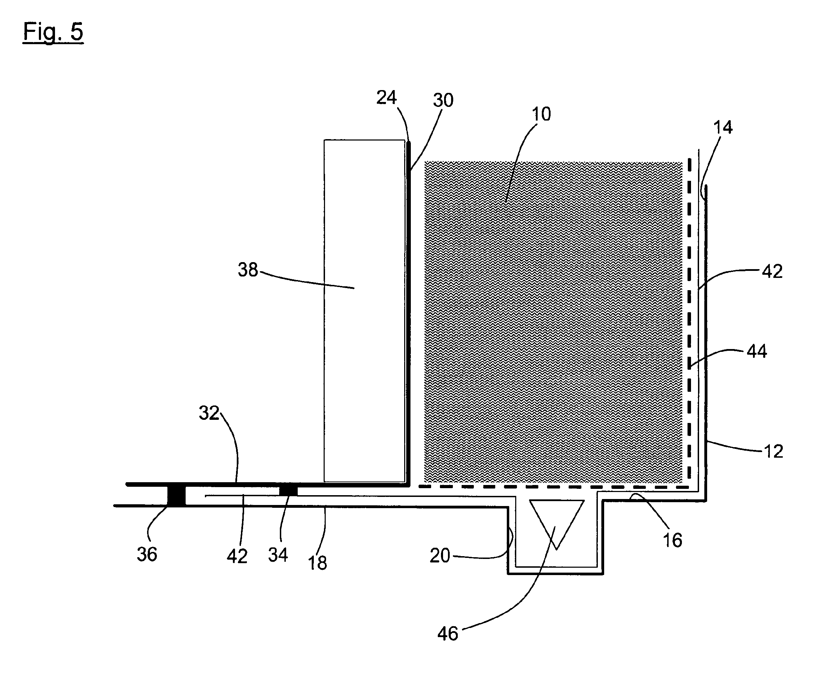

Das Verfahren wird am Beispiel der Herstellung eines Wurzeleinlegers für ein Windenergieanlagenrotorblatt erläutert. Im ersten Beispiel der Figuren 1 bis 3 wird das flüssige Kunststoffmaterial in einem Vakuuminfusionsverfahren eingebracht. Im zweiten Beispiel der Figuren 4 und 5 werden sogenannte Prepregs verwendet. Es werden in allen Figuren dieselben Bezugszeichen für die sich entsprechenden Teile verwendet.

Der Wurzeleinleger 10 erstreckt sich im fertigen Windenergieanlagenrotorblatt ausgehend von der Blattwurzel über eine Länge von einigen Metern in Richtung zur Blattspitze hin. Im Querschnitt, wie in der Fig. 1 zu erkennen, ist der Wurzeleinleger etwa halbkreisförmig, entsprechend der kreiszylindrischen Ausgestaltung des Windenergieanlagenrotorblatts im Blattwurzelbereich. Er weist eine Materialstärke im Bereich von 6 cm bis 15 cm auf und ist aus einer Vielzahl von übereinander liegenden Lagen eines Fasermaterials aufgebaut.

Die Fig. 1 zeigt den Aufbau vor der Infusion eines flüssigen Kunststoffmaterials. Der Aufbau umfasst einen Transferkörper 12, der eine konvex gekrümmte Außenfläche 14 aufweist. Die konvex gekrümmte Außenfläche 14 entspricht im Wesentlichen einer inneren Fläche des fertigen Wurzeleinlegers 10. Sie ist annähernd halbzylindermantelförmig ausgebildet. An beide Seiten der konvex gekrümmten Außenfläche 14 schließt sich jeweils eine Begrenzungsfläche 16 an, die bezogen auf die Halbkreisform der konvex gekrümmten Außenfläche 14 radial angeordnet ist und im Übrigen senkrecht zur Zeichenebene, d. h. in Axial- oder Längsrichtung des Wurzeleinlegers 10, verläuft. Die Begrenzungsflächen 16 geben jeweils eine Oberfläche des herzustellenden Bauteils vor.

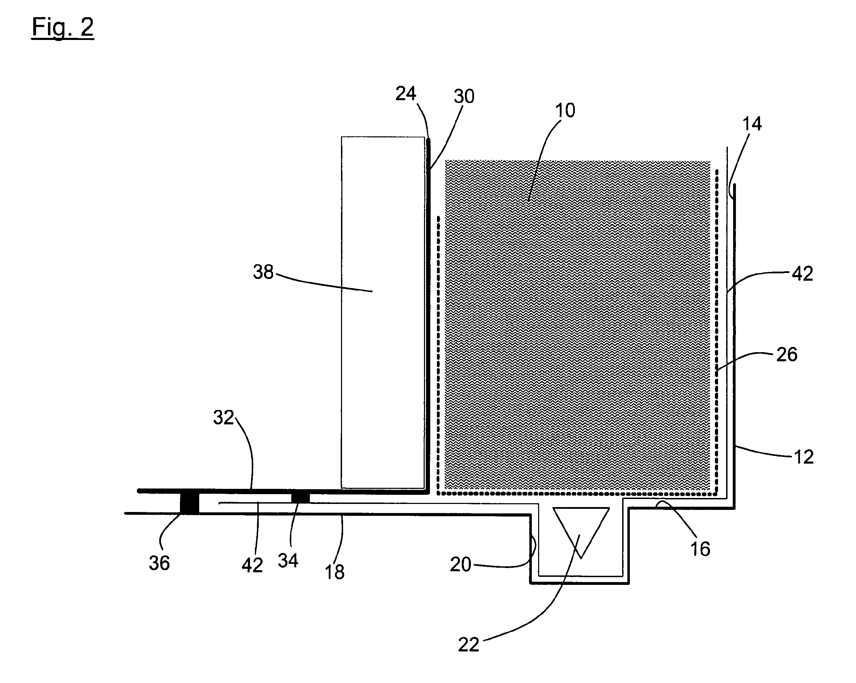

An die Begrenzungsflächen 16 schließt sich nach außen hin jeweils ein Randabschnitt 18 des Transferkörpers 12 an, der die Begrenzungsflächen 16 in der Ebene weiter nach außen über das herzustellende Bauteil hinaus fortsetzt. Etwa in der Mitte jedes Begrenzungsabschnitts 16 ist eine in Axial- oder Längsrichtung verlaufende Aussparung 20 eingearbeitet, in die ein Angusskanal 22 (siehe Fig. 2) eingesetzt wird.

Bei der Ausführung des Verfahrens wird der Transferkörper 12 zunächst in einem Abstand von der Form 24 angeordnet. Dann werden die Angusskanäle 22 in den Aussparungen 20 platziert (siehe Fig. 2) und im Bereich der Angusskanäle werden Verteilermedien 26 angeordnet. Die Verteilermedien 26 erstrecken sich über die gesamte Breite der Begrenzungsflächen 16 sowie über einen Teil der konvex gekrümmten Außenfläche 14 nach oben.

Anschließend wird eine Vielzahl von Lagen eines Fasermaterials auf der konvex gekrümmten Außenfläche 14 des Transferkörpers 12 angeordnet. Das Fasermaterial ist passgenau zugeschnitten, sodass sich Ränder jeder Lage des Fasermaterials bis nahe an die Begrenzungsflächen 16 heran erstrecken.

Anschließend werden äußere Abschnitte 28 des Verteilermediums 26 um die Lagen des Fasermaterials herumgeschlagen, sodass sie ein Stück weit an der Außenseite des herzustellenden Wurzeleinlegers 10 nach oben führen.

Nachdem die Anordnung des Fasermaterials, der Angusskanäle 22 und der Verteilermedien 26 auf dem Transferkörper 12 vorbereitet ist, wird die gesamte Anordnung unterhalb der konkaven gekrümmten Innenfläche 30 der Form 24 positioniert, bis sie sich in der gezeigten Anordnung befindet.

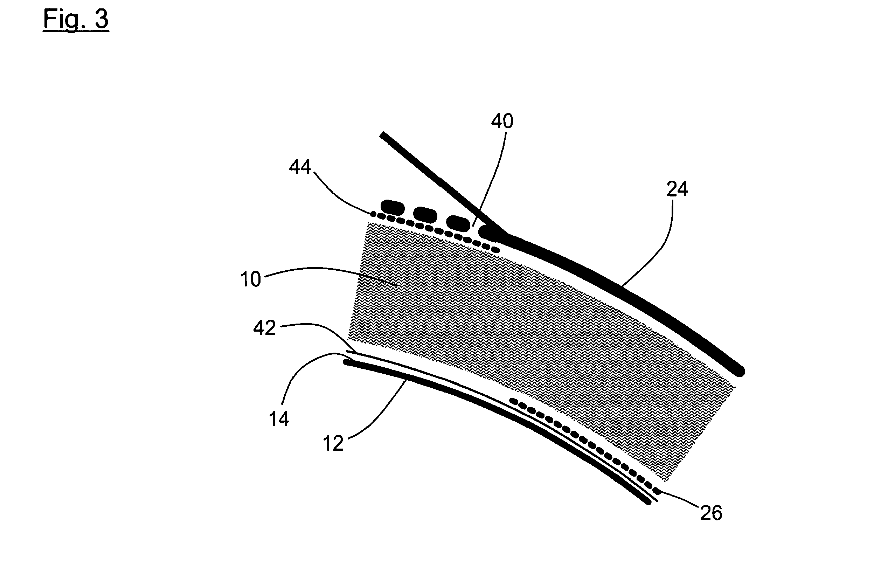

Die Form 24 weist eine entsprechend der Außenseite des herzustellenden Wurzeleinlegers 10 konkav gekrümmte Innenfläche 30 auf. Nahe dem höchsten Punkt der Form 24 befinden sich mehrere Absaugöffnungen 40. Unterhalb davon kann ein weiteres Verteilermedium mittig oberhalb des Fasermaterials angeordnet werden (siehe Fig. 3). Die Innenfläche 30 ist konkav gekrümmt und gibt eine Oberfläche des herzustellenden Wurzeleinlegers 10 vor. Außerdem weist die Form 24 zwei sich an den konkav gekrümmten Teil in Radialrichtung nach außen anschließende Randabschnitte 32 auf, die parallel zu den Randabschnitten 18 des Transferkörpers 12 angeordnet sind. Wie durch die Pfeile angeordnet, erfolgt die Vakuuminfusion des flüssigen Kunststoffmaterials von unten nach oben, wobei die beiden unteren Pfeile das Einströmen des flüssigen Kunststoffmaterials in die Form über die Angusskanäle 22 veranschaulichen und der obere Pfeil das Absaugen der Luft aus der Form 24 über die Absaugöffnungen 40.

Fig. 2 zeigt den in Fig. 1 mit A bezeichneten Ausschnitt der Anordnung. In der Vergrößerung ist die Aussparung 20 in der Begrenzungsfläche 16 des Transferkörpers 12 besser erkennbar. Der in der Fig. 2 rechts gezeigte Teil des Transferkörpers 12 ist ein unterer Abschnitt der konvex gekrümmten Außenfläche 14, die in der Fig. 2 vereinfachend geradlinig dargestellt ist. Noch bevor der Angusskanal 22 in die Aussparung 20 eingesetzt wird, wurde eine Vakuumfolie 42, entsprechend einer luftdichten Schicht, auf den Transferkörper 12 aufgelegt. Der weitere Aufbau der Anordnung, insbesondere das Anordnen der Lagen des Fasermaterials für den Wurzeleinleger 10, erfolgt anschließend, wie vorstehend beschrieben, oberhalb der Vakuumfolie 42. Nach dem Anordnen des Transferkörpers 12 unterhalb der Form 24 wird die Vakuumfolie 42 gegenüber der Form 24, genauer gegenüber einem Randabschnitt 32 dieser Form 24, mit einem Dichtungsmaterial 34 abgedichtet.

Der Randabschnitt 18 des Transferkörpers 12 ist ebenfalls gegenüber dem Randabschnitt 32 der Form 24 abgedichtet, wie bei 36 gezeigt.

Außerdem ist in der Fig. 2 ein Isoliermaterial 38 angedeutet, das die Form 34 nach außen hin thermisch isoliert. Unterhalb des Isoliermaterials 38 kann insbesondere ein Heizelement angeordnet sein.

Fig. 3 zeigt den in Fig. 1 mit B bezeichneten Ausschnitt der Anordnung. Gut erkennbar ist die Vakuumfolie 42 oberhalb der konvex geformten Außenfläche 14 des Transferkörpers 12 und das bis zu einer großen Höhe parallel dazu angeordnete Verteilermedium 26. Oberhalb der Vielzahl von Lagen des Fasermaterials für den Wurzeleinleger 10 ist ein Absaugmedium 44, z.B. eine Membran, angeordnet. Oberhalb davon weist die Form 24 in der konkav gekrümmten Innenfläche 30 mehrere benachbart angeordnete Absaugöffnungen 40 auf.

In den Figuren 4 und 5 wird das flüssige Kunststoffmaterial nicht mittels Vakuuminfusion in die zuvor geschlossene und abgedichtete Form 24 eingebracht, sondern das Fasermaterial wird im bereits mit dem flüssigen Kunststoffmaterial imprägnierten Zustand, also in Form von Prepregs, auf den Transferkörper 12 aufgelegt. Das nachfolgend nach dem Abdichten der Form 24 erzeugte Vakuum dient in diesem Fall zur Kompression der Prepregs. Darum unterscheidet sich der Vakuumaufbau vom ersten Ausführungsbeispiel. In den am Transferköper ausgebildeten Aussparungen 20 werden Absaugkanäle 46 angeordnet (siehe Fig. 5), über die die in der Form befindliche Luft abgesaugt wird. Die Form 24 ist geschlossen und weist keine weiteren Absaugkanäle auf. Angusskanäle und Verteilermedien werden nicht benötigt.

Insbesondere in Fig. 5 ist erkennbar, dass das Absaugmedium 46 nur "unterhalb" des herzustellenden Wurzeleinlegers 10 angeordnet ist, nicht jedoch an der konkav gekrümmten Innenseite 30 der Form 24.

### Liste der verwendeten Bezugszeichen:

- 10: Wurzeleinleger
- 12: Transferkörper
- 14: Konvex gekrümmte Außenfläche des Transferkörpers
- 16: Begrenzungsflächen
- 18: Randabschnitt
- 20: Aussparung
- 22: Angusskanal
- 24: Form
- 26: Verteilermedium
- 28: Äußere Abschnitte des Verteilermediums
- 30: Konkav gekrümmte Innenfläche der Form
- 32: Randabschnitt der Form
- 34: Dichtungsmaterial
- 36: Abdichtung
- 38: Isoliermaterial
- 40: Absaugöffnung
- 42: Vakuumfolie
- 44: Absaugmedium
- 46: Absaugkanal

## Patentansprüche

1. Verfahren zur Herstellung eines Windenergieanlagenbauteils mit den Schritten:
● Bereitstellen eines Transferkörpers (12), der eine konvex gekrümmte Außenfläche (14) aufweist,
● Anordnen eines Fasermaterials auf der konvex gekrümmten Außenfläche (14),
● Anordnen des Transferkörpers (12) mit dem Fasermaterial in einer Form (24), deren konkav gekrümmte Innenfläche (30) eine Oberfläche des herzustellenden Windenergieanlagenbauteils vorgibt,
● Aushärten eines das Fasermaterial umgebenden, flüssigen Kunststoffmaterials, **dadurch gekennzeichnet, dass**
● beim Anordnen des Transferkörpers (14) mit dem Fasermaterial in der Form (24) die konvex gekrümmte Außenfläche (14) des Transferkörpers (12) nach oben und die konkav gekrümmte Innenfläche (30) der Form (24) nach unten weist.

2. Verfahren nach Anspruch 1, **dadurch gekennzeichnet, dass** die Form (24) während des Anordnens des Transferkörpers (12) mit dem Fasermaterial in der Form (24) in einer festen Position verbleibt.

3. Verfahren nach Anspruch 1 oder 2, **dadurch gekennzeichnet, dass** der Transferkörper (12) von unten in die Form (24) hineinbewegt wird.

4. Verfahren nach einem der Ansprüche 1 bis 3, **dadurch gekennzeichnet, dass** der Transferkörper (12) beim Aushärten des flüssigen Kunststoffmaterials in seiner in der Form (24) angeordneten Position verbleibt.

5. Verfahren nach einem der Ansprüche 1 bis 4, **dadurch gekennzeichnet, dass** der Transferkörper (12) zusätzlich zu der konvex gekrümmten Außenfläche (14) eine Begrenzungsfläche (16) aufweist, die eine Oberfläche des herzustellenden Windenergieanlagenbauteils vorgibt.

6. Verfahren nach einem der Ansprüche 1 bis 5, **dadurch gekennzeichnet, dass** zwischen der konvex gekrümmten Außenfläche (14) und dem Fasermaterial eine luftdichte Schicht angeordnet und gegenüber der Form (24) abgedichtet wird.

7. Verfahren nach Anspruch 6, **dadurch gekennzeichnet, dass** die luftdichte Schicht eine Vakuumfolie (42) ist.

8. Verfahren nach Anspruch 6 oder 7, **dadurch gekennzeichnet, dass** die luftdichte Schicht mit einer Druckhülle umgeben und dass zwischen der luftdichten Schicht und der Druckhülle ein Überdruck erzeugt wird.

9. Verfahren nach einem der Ansprüche 1 bis 8, **dadurch gekennzeichnet, dass** der Transferkörper (12) gegenüber der Form (24) abgedichtet wird.

10. Verfahren nach einem der Ansprüche 1 bis 9, **dadurch gekennzeichnet, dass** das flüssige Kunststoffmaterial mittels Vakuuminfusion in die Form (24) infundiert wird.

11. Verfahren nach Anspruch 10, **dadurch gekennzeichnet, dass** der Transferkörper (12) eine Angussöffnung aufweist und/oder eine Aussparung (20), in der ein Angusskanal (22) angeordnet wird, und/oder dadurch, dass die Form (24) eine Absaugöffnung (40) aufweist.

12. Verfahren nach einem der Ansprüche 1 bis 9, **dadurch gekennzeichnet, dass** das Fasermaterial beim Anordnen auf der konvex gekrümmten Oberfläche (14) des Transferkörpers (12) bereits mit dem flüssigen Kunststoffmaterial durchtränkt ist.

13. Verfahren nach einem der Ansprüche 1 bis 12, **dadurch gekennzeichnet, dass** die Form (24) ein Heizelement aufweist.

14. Verfahren nach einem der Ansprüche 1 bis 13, **dadurch gekennzeichnet, dass** das Fasermaterial in einer Vielzahl von Lagen angeordnet wird, so dass sich ein Faserpaket mit einer Höhe von 50 mm oder mehr ergibt.

15. Verfahren nach einem der Ansprüche 1 bis 14, **dadurch gekennzeichnet, dass** das Windenergieanlagenbauteil ein Windenergieanlagenrotorblattteil ist.
